(19) **Europäisches Patentamt**

**European Patent Office**

**Office européen des brevets**

(11) Veröffentlichungsnummer: **0 134 497**
**B1**

(12) **EUROPÄISCHE PATENTSCHRIFT**

(45) Veröffentlichungstag der Patentschrift:
12.10.88

(21) Anmeldenummer: 84108193.8

(22) Anmeldetag: 12.07.84

(51) Int. Cl.⁴: **G 01 K 7/00**, G 01 K 7/30

(54) Rauschthermometer/Thermoelement-Messfühler und Leitung zum Anschluss an den Messfühler.

(30) Priorität: 14.07.83 DE 3325381

(43) Veröffentlichungstag der Anmeldung:
20.03.85 Patentblatt 85/12

(45) Bekanntmachung des Hinweises auf die Patenterteilung:
12.10.88 Patentblatt 88/41

(84) Benannte Vertragsstaaten:
AT BE CH DE FR GB IT LI NL

(56) Entgegenhaltungen:
DE-B-2 263 469
DE-B-2 320 751

(73) Patentinhaber: **Kernforschungsanlage Jülich Gesellschaft mit beschränkter Haftung, Postfach 1913, D-5170 Jülich 1 (DE)**

(72) Erfinder: **Brixy, Heinz, Dr., Taubenforst 4, D-5162 Niederzier (DE)**
Erfinder: **Hoewener, Hubert, Welkenrather Strasse 39, D-5100 Aachen (DE)**

EP 0 134 497 B1

## Beschreibung

Die Erfindung bezieht sich auf einen Rauschthermometer/Thermoelement-Meßfühler, der innerhalb eines Schutzmantels einen elektrischen Widerstand, dessen Rauschspannung einer Meßeinrichtung zugeführt wird, und wenigstens eine Thermoelement-Meßstelle aufweist, wobei die Schenkel des oder der Thermoelemente(s) an die Meßeinrichtung anschließbar sind. Die Erfindung bezieht sich ferner auf eine Leitung zum Anschluß an den Rauschthermometer/Thermoelement-Meßfühler.

Rauschthermometer/Thermoelement-Meßfühler sind beispielsweise aus der DE-PS-2 263 469 und der DE-PS-2 320 751 bekannt. Bei derartigen Fühlern, die sowohl eine Rauschthermometer-Meßstelle als auch zumindest eine Thermoelement-Meßstelle aufweisen, sind grundsätzlich die Vorteile eines Thermoelementes mit den Vorteilen eines Rauschthermometers verbunden. Da jedoch bei diesem bekannten Meßfühler die Signalleitungen des Rauschthermometers zugleich die Signalleitungen des oder der Thermoelemente(s) sind, ergeben sich daraus, daß die Adern der Signalleitungen aus Thermoelementmaterial bestehen, insbesondere bei längeren Leitungen gewisse Nachteile. Da nämlich derartige Materialien im Vergleich zu Kupfer relativ hohe spezifische Widerstände besitzen, resultiert hieraus eine größere Dämpfung durch die höheren Serienwiderstände, eine schlechtere Anpassung (als bei Kupfer) aufgrund der Frequenzabhängigkeit und der Größe der Serienwiderstände und ein größerer parasitärer Rauschtherm, der bei der Kreuzkorrelation eliminiert werden muß.

Es ist Aufgabe der Erfindung, sowohl einen Rauschthermometer/Thermoelement-Meßfühler als auch eine zum Anschluß an den Meßfühler geeignete Leitung zu schaffen, bei deren Einsatz die vorgenannten Nachteile weitgehend vermieden werden.

Die der Erfindung zugrundeliegende Aufgabe wird bei einem Meßfühler der eingangs bezeichneten Art gemäß der Erfindung dadurch gelöst, daß die Schenkel des oder der Thermoelemente, soweit nicht einer der Schenkel zugleich der metallische Schutzmantel ist, als Innenleiter ausgeführt sind und der Innenleiter von der als Zuleitung für den Rauschwiderstand vorgesehenen Leitung elektrisch abschirmend umgeben ist.

Zweckmäßigerweise wird Innenleiter und zugehörige Zuleitung als koaxiale Leitung ausgeführt, wobei oder Innenleiter aus dem gewünschten Thermomaterial und der Schirm der koaxialen Leitung beispielsweise aus Kupfer besteht. Die Schirme der koaxialen Leitung bilden die Leitungsadern für die Rauschthermometerleitungen, die Innenleiter bilden die Leitungsadern für das oder die Thermoelemente.

Eine vorteilhafte Ausführung des Meßfühlers gemäß der Erfindung besteht darin, daß als Material für die Zuleitung für den Rauschwiderstand ein unmagnetisches Material wie Kupfer, Inconel o.dgl. vorgesehen ist. Dadurch werden "magnetische Störungen" bei der Rauschtemperaturmessung mit zum Beispiel kombinierten NiCr/Ni-Thermoelemeten vermieden, die durch mechanisches Vibrieren des Meßfühlers und damit der magnetischen Ni-Adern induziert werden. Da mechanische Erschütterungen und Vibrationen in industriellen Anlagen häufig nicht zu vermeiden sind, wird so bei Anwendung des Meßfühlers gemäß der Erfindung mit Zuleitungen aus unmagnetischem Material in Verbindung mit einer entsprechend ausgebildeten Leitung ein wichtiges, technisches Problem gelöst.

Bei Rauschsignaladern aus unmagnetischen Materialien wird außerdem die Frequenzabhängigkeit der Leitungsparameter wesentlich verringert und dadurch die Anpassung erleichtert. Das hat zur Folge, daß die obere Grenze des Frequenzbereiches, in dem Leitung und Meßfühler ausreichend gut aneinander angepaßt werden können, zu höheren Frequenzen hin verschoben wird, wodurch die notwendige Meßzeit entsprechend verringert werden kann.

Bei den bisher verwendeten magnetischen Materialien wird primär auf Grund der Vergrößerung der "inneren Induktivität" der betreffenden Leitung die Gesamtinduktivität und damit auch der Wellenwiderstand wesentlich vergrößert. Bei üblichen NiCr/NiTe-Leitungen ergibt sich typisch eine Vergrößerung der Induktivität gegenüber unmagnetischen Leitungen um den Faktor 10 bis 15. Dies ergibt eine Äderung des Wellenwiderstandes um ca. den Faktor 3 bis 4.

Neben der Vergrößerung der Induktivität bewirkt der Magnetismus durch seinen Einfluß auf die Grenzfrequenz des Skineffektes, die deutlich herabgesetzt wird, eine wesentlich stärkere Frequenszabhängigkeit von Induktivitäts- und Widerstandsbelag der Leitung. So erhält man bei Ni-Adern mit einem Durchmesser von 1 mm bereits oberhalb von 10 kHz eine deutliche Vergrößerung des Widerstandes und eine Abnahme der Induktivität.

Bei Rauschsignaladern aus unmagnetischen Materialien entfällt mit dem Magnetismus selbstverständlich auch der bei magnetischen Adern vorhandene Übergang vom magnetischen in den unmagnetischen Zustand im Temperaturbereich des Curie-Punktes. Durch diesen Übergang ergeben sich im Verlauf der Leitung Inhomogenitätsstellen, die sich negativ auf die Anpassung auswirken. Zudem wird die Anpassung abhängig vom Temperaturverlauf längs der Leitung. Hierdurch wird die rechnerische Vorherbestimmung eines optimalen Rauschwiderstandes erheblich erschwert.

Die Form der Rauschsignaladern quasi als Rohr an Stelle von Vollmaterial bewirkt, daß die Wirkung des Skineffektes erst bei höheren Frequenzen einsetzt. Hierdurch wird die Frequenzabhängigkeit der Leitungsparameter nochmals verkleinert. Der Frequenzbereich, in dem Anpassung machbar ist, wird dadurch zu höheren Frequenzen hin erweitert. Dies wirkt sich insbesondere günstig auf die Meßzeit aus.

Beim Meßfühler gemäß der Erfindung kann - anders als dies bei den bekannten Rauschthermometer-Thermoelement-Meßfühlern der Fall ist - im Temperaturbereich bis ca. 700 °C als Material für die Rauschsignaladern auch Cu verwendet werden. Aufgrund des damit gegebenen kleinen spezifischen Widerstandes der Rauschsignalader (im Vergleich zu Ni und NiCr) ergeben sich eine Reihe von Vorteilen:

-Bessere Möglichkeiten zur Anpassung von Meßwiderstand und Kabel wegen des geringen Widerstandsbelages und als Folge hiervon kürzere Meßzeiten

- Kleinere korrelative Meßfehler von den Leitungswiderständen, d.h., es sind genaue Messungen mit entsprechend längeren mineralisolierten Leitungen möglich

- Kleinerer parasitärer Rauschterm von den Leitungswiderständen und deshalb kürzere Meßzeiten

- Im allgemeinen weniger Probleme mit äußeren elektromagnetischen Störfeldern aufgrund verminderter Einkoppelung; zusätzlich geringerer Gegentakt- zu Gleichtaktanteil von Störsignalen.

Alle hier aufgeführten Gesichtspunkte sind z. B. bei Rauschtemperaturmessungen im Kern von Leichtwasserreaktoren wichtig.

Das der Erfindung zugrundeliegende, die Anordnung von Thermoelementader und Rauschsignalader betreffende Prinzip ermöglicht verschiedene Ausführungsvarianten des Meßfühlers.

So ist - wie dies bei den bekannten Meßfühlern üblich ist - die Meßstelle des oder der Thermoelemente(s) mit dem Rauschwiderstand verbunden, wobei der Rauschwiderstand auch - wie dies bei dem aus der DE-PS-2 320 751 bekannten Meßfühler der Fall ist - in Reihenschaltung zwischen den eine Meßstelle bildenden Enden zweier Thermoelementschenkel angeordnet sein kann.

Darüberhinaus besteht eine weitere, sehr vorteilhafte Ausführungsform des Meßfühlers gemäß der Erfindung auch darin, daß das oder die Thermoelement(e) und der Rauschwiderstand elektrisch voneinander isoliert im Meßfühler angeordnet sind.

Die der Erfindung zugrundeliegende Aufgabe wird bei einer Leitung zum Anschluß an einen Rauschthermometer/Thermoelement-Meßfühler, bei der ein äußerer, zum Anschluß an den Schutzmantel des Meßfühlers vorgesehener metallischer Leitungsmantel vorgesehen ist, dadurch gelöst, daß die innerhalb des Leitungsmantels verlaufenden, als Thermoelementzuleitungen vorgesehenen Adern als Innenleiter ausgeführt und jeweils von zum Anschluß an die als Zuleitung für den Rauschwiderstand vorgesehenen, innerhalb des Leitungsmantels verlaufenden Leitungen elektrisch abschirmend umgeben sind.

Die Leitung gemäß der Erfindung, die außerhalb der "heißen Zone", in der sich der Meßfühler befindet, an den Meßfühler angeschlossen ist und daher im allgemeinen - im Gegensatz zum Meßfühler, dessen Leitungen im allgemeinen mineralisoliert sind - als kunststoffisolierte Leitung ausgeführt ist, führt in entsprechender Weise, wie dies beim Meßfühler gemäß der Erfindung der Fall ist, zu einer Verbesserung der Rauschtemperaturmessung. So führt beispielsweise auch eine Leitungsausführung, bei der die als Zuleitung für den Rauschwiderstand vorgesehenen Leitungen aus einem unmagnetischen Material wie Kupfer, Inconel o.dgl. bestehen, zu den gleichen, bereits oben für den Meßfühler mit unmagnetischen Zuleitungen angegebenen Vorteilen.

Die Leitung gemäß der Erfindung ist in vorteilhafter Weise sowohl an einen Meßfühler gemäß der Erfindung als auch an einen Meßfühler der aus der DE-PS-2 263 469 und der DE-PS-2 320 751 bekannten Art anschließbar.

Eine zweckmäßige Ausführungsform der Leitung gemäß der Erfindung besteht außerdem darin, daß vier als Thermoelementzuleitungen vorgesehene Adern mit diese Adern jeweils umgebenden Zuleitungen für den Rauschwiderstand vorgesehen sind und daß jeweils zwei der Adern mit Zuleitung von einem innerhalb des Leitungsmantel angeordneten zusätzlichen metallischen Mantel umgeben sind.

Ausführungsvarianten des Rauschthermometer/ Thermoelement-Meßfühlers sowie der Leitung gemäß der Erfindung sind in der Zeichnung schematisch dargestellt und werden im folgenden näher erläutert:

Es zeigen

Figur 1 einen Meßfühler mit einer Thermoelement-Meßstelle, wobei der Rauschwiderstand in Reihe zu den die Meßstelle bildenden Enden zweier Thermoelementschenkel geschaltet ist,

Figur 2 einen Meßfühler gemäß Figur 1 mit einer Thermoelement-Meßstelle in anderer Darstellung; den Querschnitt einer zweiadrigen Leitung,

Figur 3 einen Meßfühler mit einer Thermoelement-Meßstelle, wobei das Thermoelement und der Rauschwiderstand elektrisch voneinander isoliert sind; den Querschnitt einer zweiadrigen Leitung,

Figur 4 einen Meßfühler mit einer Thermoelement-Meßstelle, wobei einer der Schenkel des Thermoelements zugleich den Schutzmantel bildet; den Querschnitt einer einadrigen Leitung,

Figur 5 einen Meßfühler mit zwei Thermoelement-Meßstellen, wobei die Meßstellen mit dem Rauschwiderstand verbunden sind; den Querschnitt einer vieradrigen Leitung,

Figur 6 einen Meßfühler mit zwei Thermoelementen, wobei die Thermoelemente und der Rauschwiderstand elektrisch voneinander isoliert sind; den Querschnitt einer vieradrigen Leitung,

Figur 7 den Querschnitt einer vieradrigen Leitung, wobei jeweils zwei der Adern mit Zuleitung für den Rauschwiderstand von einem innerhalb des Leitungsmantels angeordneten zusätzlichen metallischen Mantel umgeben sind,

Figur 8 einen Meßfühler bisheriger Bauart mit zwei Thermoelement-Meßstellen in Verbindung mit einer vieradrigen Leitung gemäß der Erfindung.

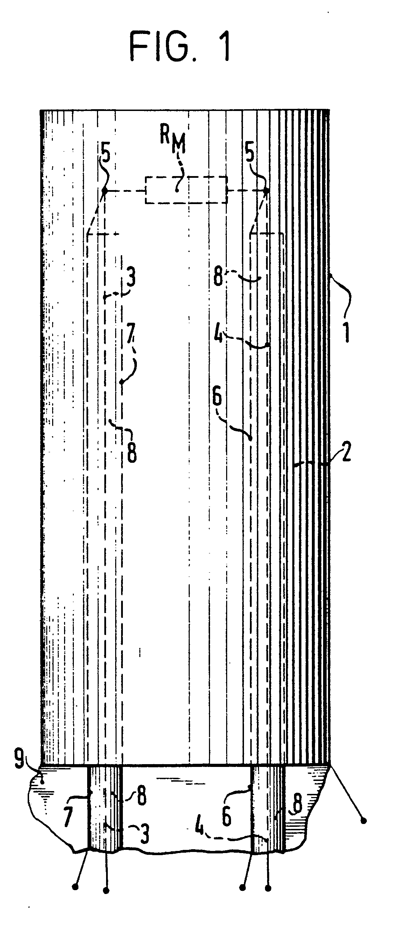

Wie aus Figur 1 hervorgeht, sind die in einer innerhalb eines Schutzrohres 1 angeordneten Isolierung 2 geführten beiden Schenkel 3 und 4 eines Thermoelementes an den an der Meßstelle liegenden Enden 5 über einen als Rauschwiderstand ausgebildeten elektrischen widerstand $R_M$ miteinander verbunden. Die Schenkel der Thermoelemente sind als Innenleiter ausgeführt und von der als Zuleiter 6 und 7 für den Rauschwiderstand $R_M$ vorgesehenen Leitung elektrisch abschirmend umgeben. Die Schenkel befinden sich dabei in einer Isolierung 8. Das Schutzrohr 1 ist mit einer geeigneten Masse 9 versiegelt. Die Thermoelementadern 3 und 4 sind durch die Versiegelung 9 durchgeführt und mit einer Einrichtung zur Messung und Anzeige der Thermoelementspannung verbunden. Die Leiter 6 und 7 sind ebenfalls durch die Versiegelung 9 geführt und mit einer Einrichtung zur Messung der Rauschspannung verbunden.

Die Meßfühler sind in der Regel mineralisoliert, wobei als Isolierung 2 und 8 beispielsweise Magnesiumoxid oder Aluminiumoxid Verwendung finden. Die Leitung, die in der Zeichnung im Querschnitt dargestellt ist, ist dagegen in der Regel kunststoffisoliert. Die Isolierungen 2 und 8 bestehen dann aus einem geeigneten Kunststoff.

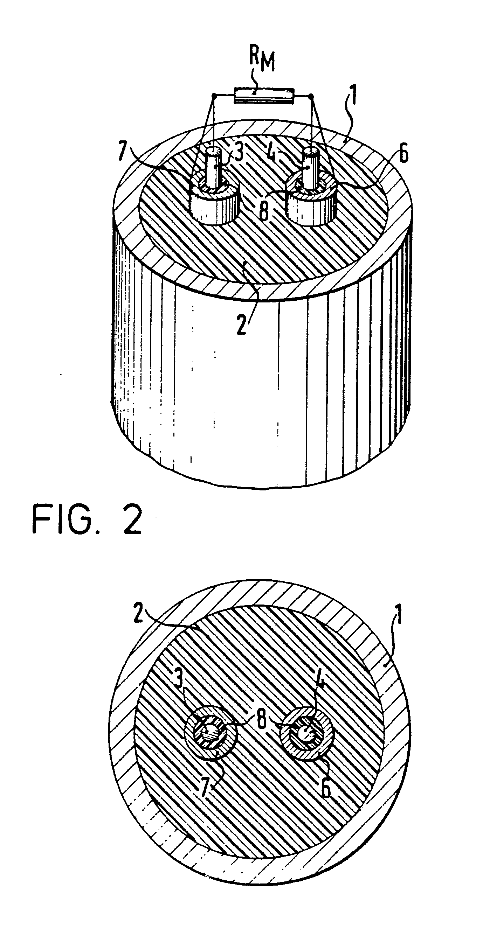

Der in Figur 2 dargestellte Meßfühler entspricht der in Figur 1 wiedergegebenen Ausführungsform. Der Schutzmantel 1 ist jedoch nur teilweise dargestellt.

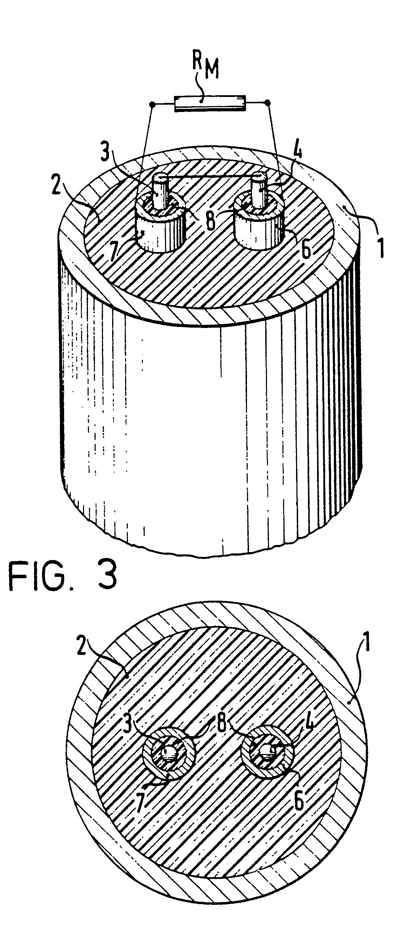

Bei der in Figur 3 wiedergegebenen Ausführungsform des Meßfühlers, die in der gleichen Weise wie in Figur 2 dargestellt ist, sind das Thermoelement und der Rauschwiderstand $R_M$ elektrisch voneinander isoliert.

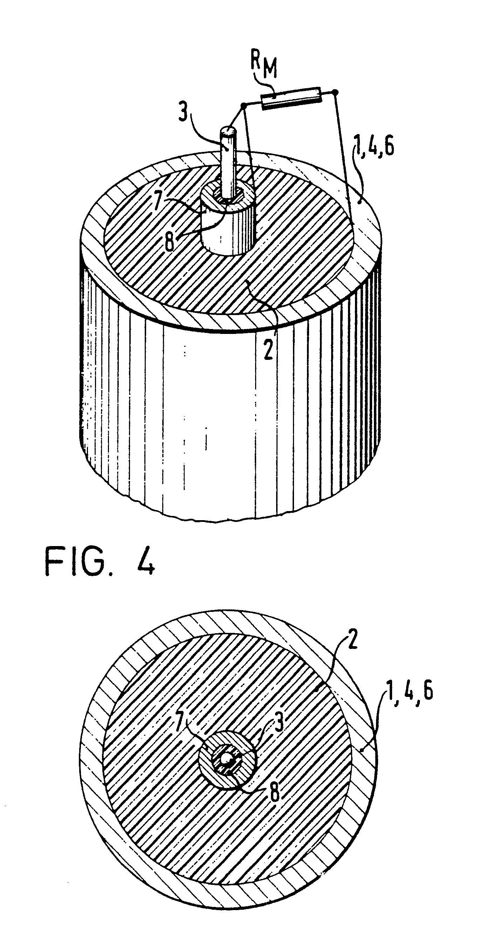

Auch bei der in Figur 4 dargestellten Ausführungsform ist neben dem Rauschwiderstand $R_M$ nur eine Thermoelement-Meßstelle vorgesehen. Bei dieser Ausführungsform ist jedoch einer der Schenkel, die Ader 3, mit einem Zuleiter 7 für den Rauschwiderstand $R_M$ abschirmend umgeben, während der andere Schenkel 4 rohrförmig ausgebildet und so angeordnet ist, daß er zugleich die Funktion des Schutzrohres 1 und die des Leiters 6 übernimmt. Der rohrförmig ausgebildete Schenkel ist dabei zweckmäßigerweise aus unmagnetischem Material hergestellt.

Die in Figur 4 wiedergegebene Ausführungsform kann zur Anwendung kommen, wenn die Meßstelle nicht isoliert zu sein braucht.

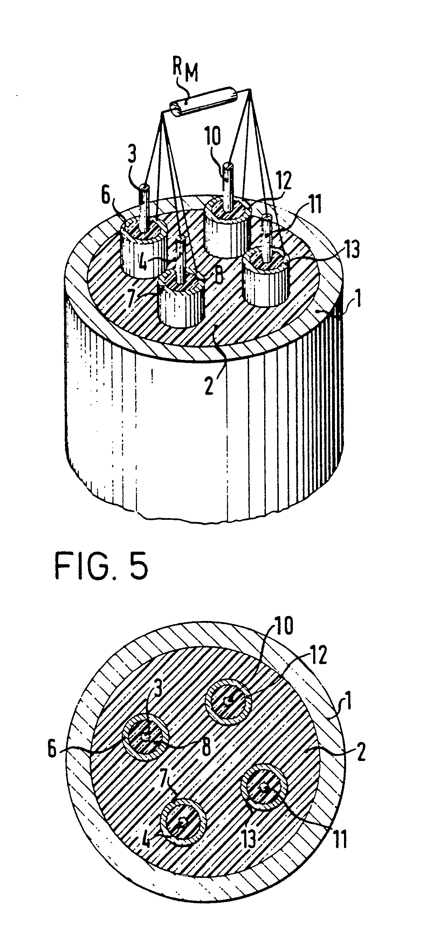

In Figur 5 ist eine Ausführungsform des Meßfühlers wiedergegeben, bei der außer dem Rauschwiderstand zwei Thermoelement-Meßstellen vorgesehen sind. Die vier Adern der Thermoelemente sind als Innenleiter 3 und 4 sowie 10 und 11 ausgebildet. Sie sind von den Zuleitern 6 und 7 sowie 12 und 13 für den Rauschwiderstand $R_M$ elektrisch abschirmend umgeben. Die Thermoelementadern sind paarweise mit den Zuleitern und damit auch mit dem Rauschwiderstand $R_M$ elektrisch verbunden.

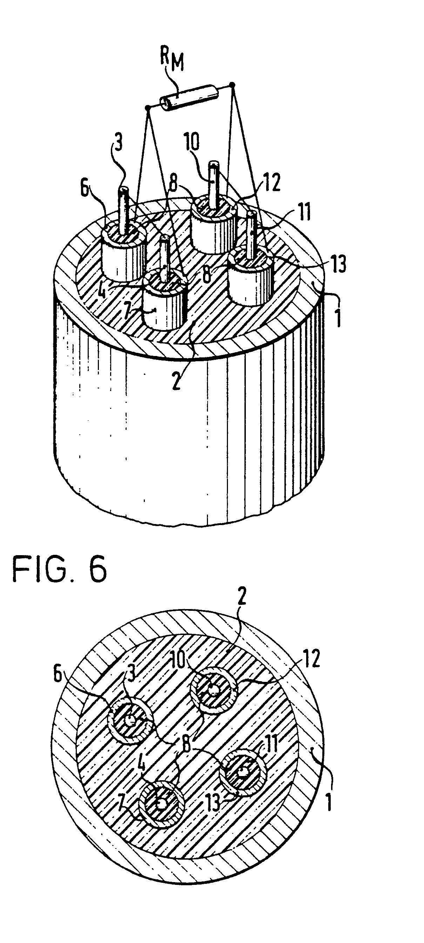

Auch bei der in Figur 6 dargestellten Ausführungsform sind zwei Thermoelemente vorgesehen. Die Thermoelement-Meßstellen sind jedoch vom Rauschwiderstand $R_M$ elektrisch isoliert.

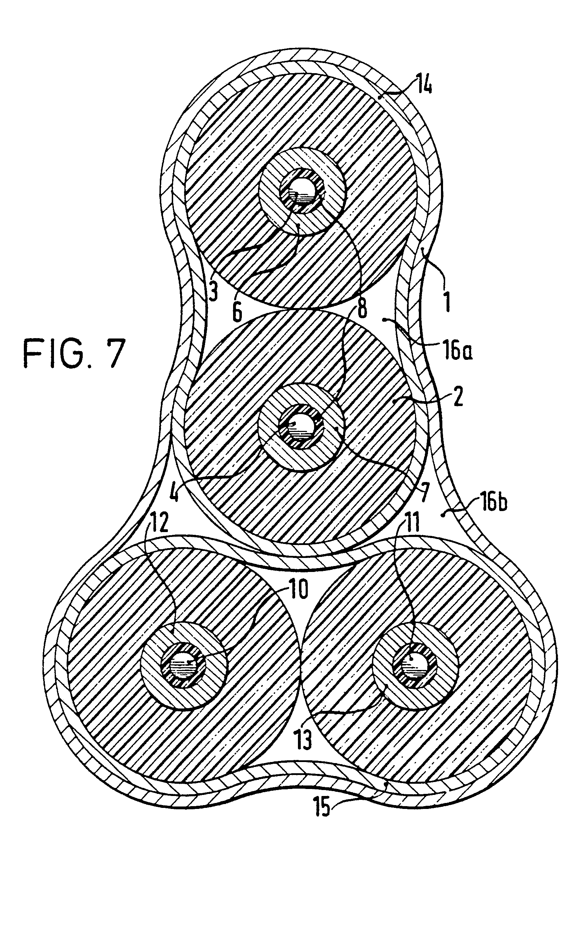

Figur 7 zeigt einen Querschnitt durch eine vieradrige Leitung, bei der die Adern 3 und 4 sowie 10 und 11 von Zuleitungen 6 und 7 sowie 12 und 13 elektrisch abschirmend umgeben sind. Jeweils zwei Adern mit Zuleitung sind jedoch von einem innerhalb des Schutzmantels 1 angeordneten zusätzlichen metallischen Mantel 14, 15 umgeben. Aus festigungstechnischen Gründen können innerhalb der metallischen Mäntel bzw. des Schutzmantels Luftspalte 16a und 16b verbleiben.

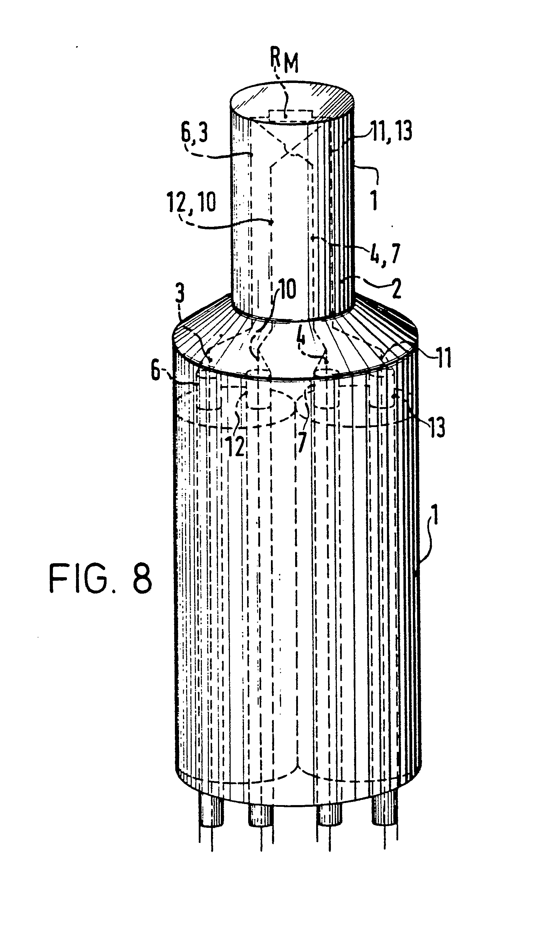

In Figur 8 ist ein Meßfühler üblicher Bauart in Verbindung mit einem Leitungssystem gemäß der Erfindung wiedergegeben. Bei dieser Anordnung von Meßfühler und Leitung tritt die abschirmende Wirkung der die Adern umgebenden Zuleitung zwar nur teilweise, nämlich im Bereich der Leitung ein, was dennoch eine erhebliche Verbesserung der Meßbedingungen mit sich bringen kann.

**Patentansprüche**

1. Rauschthermometer/Thermoelement-Meßfühler, der innerhalb eines Schutzmantels einen elektrischen Widerstand, dessen Rauschspannung einer Meßeinrichtung zugeführt wird, und wenigstens eine Thermoelement-Meßstelle aufweist, wobei die Schenkel des oder der Thermoelemente an die Meßeinrichtung anschließbar sind, dadurch gekennzeichnet, daß die Schenkel des oder der Thermoelemente, soweit nicht einer der Schenkel zugleich der metallische Schutzmantel ist, als Innenleiter (3, 4 sowie 10, 11) ausgeführt sind und der Innenleiter von der als Zuleitung (6, 7 sowie 12, 13) für den Rauschwiderstand ($R_M$) vorgesehenen Leitung elektrisch abschirmend umgeben ist.

2. Rauschthermometer/Thermoelement-Meßfühler gemäß Anspruch 1, dadurch gekennzeichnet, daß als Material für die Zuleitung (6, 7 sowie 12, 13) für den Rauschwiderstand ($R_M$) ein unmagnetisches Material wie Kupfer, Inconel o.dgl. vorgesehen ist.

3. Rauschthermometer/Thermoelement-Meßfühler gemäß Anspruch 1 oder 2, dadurch gekennzeichnet, daß die Meßstelle des oder der Thermoelemente mit dem Rauschwiderstand ($R_M$) verbunden ist.

4. Rauschthermometer/Thermoelement-Meßfühler gemäß Anspruch 3, dadurch gekennzeichnet, daß der Rauschwiderstand ($R_M$) in Reihenschaltung zwischen den eine Meßstelle bildenden Enden zweier Thermoelementschenkel (3 und 4) angeordnet ist.

5. Rauschthermometer/Thermoelement-Meßfühler gemäß Anspruch 1 oder 2, dadurch gekennzeichnet, daß das oder die Thermoelemente und der als Rauschwiderstand ($R_M$) vorgesehene elektrische Widerstand elektrisch voneinander isoliert im Meßfühler angeordnet sind.

6. Leitung zum Anschluß an einen Rauschthermometer/Thermoelement-Meßfühler, bei der ein äußerer, zum Anschluß an den Schutzmantel des Meßfühlers vorgesehener metallischer Leitungsmantel vorgesehen ist, dadurch gekennzeichnet, daß die innerhalb des Leitungsmantels (1) verlaufenden, als Thermoelementzuleitungen vorgesehenen Adern als Innenleiter (3, 4 sowie 10, 11) ausgeführt und jeweils von zum Anschluß an die als Zuleitung für den Rauschwiderstand ($R_M$) vorgesehenen, innerhalb des Leitungsmantels (1) verlaufenden Leitungen (6, 7 sowie 12, 13) elektrisch abschirmend umgeben sind.

7. Leitung gemäß Anspruch 6, dadurch gekennzeichnet, daß die als Zuleitung für den Rauschwiderstand ($R_M$) vorgesehenen Leitungen (6, 7 sowie 12, 13) aus einem unmagnetischen Material, wie Kupfer, Inconel o.dgl. bestehen.

8. Leitung gemäß einem der Ansprüche 6 oder 7, dadurch gekennzeichnet, daß vier als Thermoelementzuleitungen vorgesehene Adern (3, 4 sowie 10, 11) mit diese Adern jeweils umgebenden Zuleitungen (6, 7 sowie 12, 13) für den Rauschwiderstand ($R_M$) vorgesehen sind und daß jeweils zwei der Adern mit Zuleitung von einem innerhalb des Leitungsmantels (1) angeordneten zusätzlichen metallischen Mantel (14, 15) umgeben sind.

## Claims

1. Noise thermometer/thermo-element measuring device, which exhibits, within a protective casing, an electrical resistor, the noise voltage of which is supplied to a measuring instrument, and at least one thermo-element measuring point, the limbs of the thermo-element or of the thermo-elements being connectable to the measuring instrument, characterized in that the limbs of the thermo-element or of the thermo-elements, to the extent that one of the limbs is not at the same time the metallic protective casing, are constructed as inner conductor (3, 4 as well as 10, 11) and the inner conductor is surrounded, with electrical screening, by the lead provided as supply lead (6, 7 as well as 12, 13) for the noise resistor ($R_M$).

2. Noise thermometer/thermo-element measuring device according to Claim 1, characterized in that a non-magnetic material such as copper, Inconel or the like is provided as material for the supply lead (6, 7 as well as 12, 13) for the noise resistor ($R_M$).

3. Noise thermometer/thermo-element measuring device according to Claim 1 or 2, characterized in that the measuring point of the thermo-element or of the thermo-elements is connected to the noise resistor ($R_M$).

4. Noise thermometer/thermo-element measuring device according to Claim 3, characterized in that the noise resistor ($R_M$) is disposed in series between the ends of two thermo-element limbs (3 and 4), which ends form a measuring point.

5. Noise thermometer/thermo-element measuring device according to claim 1 or 2, characterized in that the thermo-element or the thermo-elements and the electrical resistor provided as noise resistor ($R_M$) are disposed so as to be electrically insulated from one another in the measuring device.

6. Lead for connection to a noise thermometer/thermo-element measuring device, in which lead an outer metallic lead casing provided for connection to the protective casing of the measuring device is provided, characterized in that the cores which extend within the lead casing (1) and which are provided as thermo-element supply leads are designed as inner conductor (3, 4 as well as 10, 11) and are in each instance surrounded, with electrical screening, by leads (6, 7 as well as 12, 13) which are provided for connection to the supply lead for the noise resistor ($R_M$) and which extend within the lead casing (1).

7. Lead according to Claim 6, characterized in that the leads (6, 7 as well as 12, 13) provided as supply lead for the noise resistor ($R_M$) consist of a non-magnetic material, such as copper, Inconel or the like.

8. Lead according to one of Claims 6 or 7, characterized in that four cores (3, 4 as well as 10, 11) provided as thermo-element supply leads, with leads (6, 7 as well as 12, 13), surrounding these cores in each instance, for the noise resistor ($R_M$) are provided, and in that in each instance two of the cores with supply lead are surrounded by an additional metallic casing (14, 15) disposed within the lead casing (1).

## Revendications

1. Capteur de mesure à thermomètre à bruit/thermocouples, comportant, à l'intérieur d'une gaine protectrice, une résistance électrique dont la tension de bruit est envoyée à un dispositif de mesure, et au moins un point de mesure des thermocouples, les branches du ou des thermocouples pouvant être raccordées au dispositif de mesure, caractérisé par le fait que dans la mesure où l'une des branches du ou des thermocouples ne constitue pas simultanément la gaine protectrice métallique, lesdites branches sont réalisées sous la forme de conducteurs intérieurs (3, 4 et 10, 11), et le conducteur intérieur de la ligne prévue en tant que ligne d'alimentation (6, 7 et 12, 13) pour la résistance de bruit ($R_M$) est entouré d'une manière établissant un blindage électrique.

2. Capteur de mesure à thermomètre à bruit/thermocouples suivant la revendication 1, caractérisé par le fait qu'il est prévu, comme matériau pour la ligne d'alimentation (6, 7 et 12, 13) de la résistance de bruit ($R_M$), un matériau amagnétique tel que du cuivre, de l'inconel ou analogue.

3. Capteur de mesure à thermomètre à bruit/thermocouple selon la revendication 1 ou 2, caractérisé en ce que le point de mesure du ou des thermocouples est relié à la résistance de bruit ($R_M$).

4. Capteur de mesure à thermomètre à bruit/thermocouples suivant la revendication 3, caractérisé par le fait que la résistance de bruit ($R_M$) est disposée selon un montage série entre les extrémités, constituant un point de mesure, de deux branches (3 et 4) d'un thermocouple.

5. Capteur à thermomètre à bruit/thermocouples suivant la revendication 1 ou 2, caractérisé par le fait que le ou les thermocouples et la résistance électrique prévue en tant que résistance de bruit ($R_M$) sont disposés en étant isolés électriquement les uns des autres dans le capteur de mesure.

6. Ligne de raccordement à un capteur de mesure à thermomètre à bruit/thermocouples comportant une gaine métallique extérieure prévue pour le raccordement à la gaine de protection du capteur de mesure, caractérisée par le fait que les fils situés à l'intérieur de la gaine (1) de la ligne et prévus sous la forme de lignes d'alimentation des thermocouples, sont réalisés sous la forme de conducteurs intérieurs (3, 4 et 10, 11) et sont entourés chacun, d'une manière réalisant un blindage électrique, par des conducteurs (6, 7 et 12, 13) prévus en tant que ligne d'alimentation pour la résistance de bruit ($R_M$) et situés à l'intérieur de la gaine (1) prévue de la ligne.

7. Ligne suivant la revendication 6, caractérisée par le fait que les conducteurs (6, 7 et 12, 13) prévus en tant que ligne d'alimentation pour la résistance de bruit ($R_M$) sont constitués par un matériau amagnétique tel que du cuivre, de l'inconel ou analogue.

8. Ligne suivant l'une des revendications 6 ou 7, caractérisée par le fait qu'il est prévu quatre fils (3, 4 et 10, 11) en tant que lignes d'alimentation des thermocouples, comportant des lignes (6, 7 et 12, 13) entourant respectivement ces fils et servant à réaliser l'alimentation de la résistance de bruit ($R_M$) et que respectivement deux des fils ainsi que la ligne d'alimentation sont entourés par une gaine métallique supplémentaire (14, 15) située à l'intérieur de la gaine (1) de la ligne.

# FIG. 1

FIG. 2

FIG. 3

FIG. 4

# FIG. 5

FIG. 6

FIG. 7

FIG. 8